# EUROPEAN PATENT APPLICATION

(11) **EP 4 378 546 A1**
(43) Date of publication of application: **05.06.2024**
(21) Application number: 23220692.0
(22) Date of filing: 29.12.2023
(51) Int. Cl.: A63B 21/072

(54) **MULTIFUNCTIONAL FITNESS EQUIPMENT**

(30) Priority: 17.11.2023 CN 202323131862 U
(71) Applicant: Shenzhen Shenlaiyibi Technology Co., Ltd., Shenzhen Guangdong 518110 (CN)
(72) Inventor: WANG, Longfei, Shenzhen, Guangdong, 518110 (CN)
(74) Representative: Ipside

(57) **Abstract**

The present disclosure provides a multifunctional fitness equipment, including a weight box (1), a connection hole (3) provided on one end of the weight box and detachably connected with a holding rod, and a handle (2) provided on a side surface of the weight box or on an end surface away from the connection hole of the weight box. The present disclosure provides a simple structure and is convenient to use. By using the kettlebell as the foundation fitness equipment, the users can obtain complete fitness experience when performing kettlebell fitness training. In addition, by choosing various holding rods to assemble, the functions of the fitness equipment can be changed. It will not interfere the assembled equipment but reserve complete experience when performing the fitness activities of kettlebells, dumbbells, and barbells respectively, therefore has a good experience effect.

## Description

### Cross-references to Related Applications

This application claims the benefit of priority to Chinese Patent Application Number 202323131862.1, filed on November 17, 2023, in the China National Intellectual Property Administration. The entire contents of the above-identified application are hereby incorporated by reference.

### Technical Field

The present disclosure relates to the field of fitness equipment, particularly relates to a multifunctional fitness equipment.

### Background of the Invention

Dumbbells, kettlebells, and barbells are common fitness equipment that can effectively exercise arms and chest muscles after long-term use, therefore are favored by fitness enthusiasts. In existing technologies, to satisfy the users' fitness needs for dumbbells, kettlebells, and barbells, and to achieve multifunction of the fitness equipment, to use different fitness equipment is usually implemented by assembling the above-mentioned equipment on dumbbells to superimpose functions based on the dumbbells. Users' experience is mainly based on dumbbells but with the kettlebells and barbells as supplement. That is, the users' experience is still primarily of the dumbbells, while the experiencing solely using kettlebells or barbells may not be achieved.

Moreover, to achieve the overall structure stability of the fitness equipment, the existing technologies also adopt a mechanism of filling solution, instead of using dumbbell plates, to implement counterweight. To realize the multifunctional fitness requirements of the weight box (i.e., realize various combinations of dumbbells, kettlebells, and barbells), it is required to install a threaded sleeve connected with an outer holding rod before the filling solution solidifies. When the threaded sleeve is installed into the weight box, since the filling solution is in liquid state and ventilation is needed to facilitate the solidifying process of the filing solution, the filling solution may not be fully infilled and the gas generated during the solidifying process may not be completely released. All the above-described parameters make the assembly processes inconvenient to the users, and may even become security risks.

### Summary of the Invention

The present disclosure proposes a multifunctional fitness equipment wherein when using the kettlebells and barbells, inconvenient installation of the threaded sleeve, and the gas not able to be discharged during the installation of the threaded sleeve proposed in the prior art of existing fitness equipment which superimposing functions based on dumbbells.

The technical solutions of the present disclosure are implemented as below:
A multifunctional fitness equipment includes a weight box, a connection hole provided on one end of the weight box, a holding rod detachably received in the connection hole, and a handle provided on a side surface of the weight box or on an end surface, away from the connection hole, of the weight box.

As a further optimization, the connection hole is a threaded hole. Each end of the holding rod is provided with an external threaded connection end configured for threadedly connecting with the connection hole.

As a further optimization, the weight box includes an outer housing configured for receiving filling solution. One end of the outer housing is provided with an opening. The weight box further includes an inner sealing sleeve arranged in the opening. The inner sealing sleeve is configured for fixedly connecting to the solidified filing solution. The weight box further includes a first outer sealing sleeve sleeved on an outside of the inner sealing sleeve. The connection hole is a threaded hole arranged inside the first outer sealing sleeve.

As a further optimization, the weight box further includes a ring gear installed on an outer wall of the inner sealing sleeve. Inner teeth evenly distributed on an inner wall of the ring gear, and outer teeth evenly distributed on an outer end surface of the ring gear.

As a further optimization, the inner sealing sleeve includes a flange face on the outer end surface of the inner sealing sleeve and a recessed groove on the flange face, the recessed groove is arranged in a circumferential direction of the flange face. The outer teeth abut the flange face. A first space is defined between the inner teeth, and a second space is defined between the outer teeth. When the inner sealing sleeve is installed inside the outer housing, the filling solution received in the outer housing and the gas discharged by the filling solution as the filling solution solidifies are released by the first space, the second space, and the recessed groove.

As a further optimization, the holding rod includes a first holding rod, including a rod body. Each end of the rod body is rotatably installed with a connection rotary knob. The connection rotary knob is threadedly connected with the first outer sealing sleeve.

As a further optimization, each end of the rod body is further arranged with a limiting head. The first outer sealing sleeve includes a limiting hole with a polylateral structure. The limiting head is configured for inserting into the first outer sealing sleeve and cooperating with the limiting hole to prevent relative rotations between the first outer sealing sleeve and the rod body.

As a further optimization, the holding rod further includes at least one wedge block detachably installed on a radial position of the connection rotary knob. Each end of the rod body is further arranged with an annular groove. One end of the at least one wedge block is extended along a direction of a center hole of the connection rotary knob and is configured for placing in the annular groove.

As a further optimization, the holding rod further includes a first holding sleeve sleeved on an outside of the rod body.

As a further optimization, the holding rod further includes a second holding rod. Each end of the second holding rod is detachably connected with a corresponding end of the first holding rod.

As a further optimization, the second holding rod includes an inner sleeve. Each end of the second holding rod is fixedly provided with a second outer sealing sleeve. The second holding rod further includes a second holding sleeve installed on an outside of the inner sleeve. The second outer sealing sleeve is threadedly connected with the first holding rod.

The present disclosure includes the following benefits when using the technical solutions above:
1) The present disclosure provides a simple structure and is convenient to use. By using the kettlebell as the foundation fitness equipment, the users can obtain complete fitness experience when performing kettlebell fitness training. In addition, by choosing various holding rods to assemble, the functions of the fitness equipment can be changed. It will not interfere the assembled equipment but reserve complete experience when performing the fitness activities of kettlebells, dumbbells, and barbells respectively, therefore has a good experience effect.
2) The present disclosure adopts a ring gear structure that is convenient for ventilation. When the inner sealing sleeve is installed inside the outer shell, the filling solution and the gas generated during solidification of the filling solution can be discharged through the gaps between the teeth and the grooves of the inner sealing sleeve. The present disclosure also provides a wedge block that is detachably installed on the connection rotary knob. During the installation of the wedge block, the connected rotary knob can be rotated to fix the dumbbell rod with the kettlebells. It avoids the problems of inconvenient installation and inability to vent, and improves the molding effect of the weight box.

### Brief description of the Drawings

FIG. 1 is a three-dimensional structure diagram illustrating a first embodiment of a multifunctional fitness equipment according to the present disclosure.
FIG. 2 is a three-dimensional structure diagram illustrating a second embodiment of a multifunctional fitness equipment according to the present disclosure.
FIG. 3 is a three-dimensional structure diagram illustrating a third embodiment of a multifunctional fitness equipment according to the present disclosure.
FIG. 4 is a three-dimensional structure diagram illustrating a fourth embodiment of a multifunctional fitness equipment according to the present disclosure.
FIG. 5 is a three-dimensional structure diagram illustrating a fifth embodiment of a multifunctional fitness equipment according to the present disclosure.
FIG. 6 is a three-dimensional structure diagram illustrating a sixth embodiment of a multifunctional fitness equipment according to the present disclosure.
FIG. 7 is an exploded schematic diagram illustrating a connection between a first holding rod and a weight box of the multifunctional fitness equipment shown in FIG. 2.
FIG. 8 is a sectional view diagram of connection between the first holding rod and the weight box shown in FIG. 7.
FIG. 9 is a three-dimensional sectional view diagram illustrating an inner sealing sleeve of the connection between the first holding rod and the weight box shown in FIG. 7.
FIG. 10 is a three-dimensional structure diagram illustrating a ring gear of the connection between the first holding rod and the weight box shown in FIG. 7.
FIG. 11 is a three-dimensional sectional view diagram illustrating an outer sealing sleeve of the connection between the first holding rod and the weight box shown in FIG. 7.
FIG. 12 is a three-dimensional structure diagram illustrating a connection rotary knob of the connection between the first holding rod and the weight box shown in FIG. 7.
FIG. 13 is a three-dimensional structure diagram illustrating a second holding rod shown in FIG. 5.

### Detailed Description of Embodiments

In order to further describe the technical solutions of the present disclosure, specific embodiments of the present disclosure combined with the accompanying drawings are stand here. It should be understood that the detailed embodiments of the disclosure described here are used to explain the present disclosure only, instead of limiting the present disclosure.

### <First Embodiment>

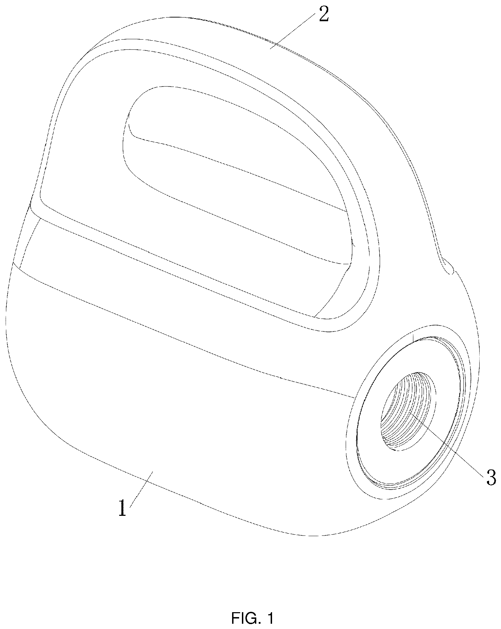

Referring to FIG. 1, the present disclosure provides a multifunctional fitness equipment, the multifunctional fitness equipment includes a weight box 1. A connection hole 3 is provided on one end of the weight box 1. A holding rod is detachably received in the connection hole 3. A handle 2 is provided on the weight box 1. More specifically, the handle 2 is arranged on a side surface of the weight box or on an end surface, away from the connection hole, of the weight box.

In this embodiment, the connection hole 3 is not installed with the holding rod. The handle 2 is integrally connected to the side surface of the weight box 1.

The fitness equipment according to this embodiment is a kettlebell. The users can grip the handle 2 to perform various training movements such as pushing, lifting, raising, and throwing, etc. Compared with the kettlebell assembled using dumbbell as basic fitness equipment in the prior art, this kettlebell of the present embodiment has the best integrity, avoids users being interfered by the dumbbell structure during fitness, and provides a better fitness experience.

### <Second embodiment>

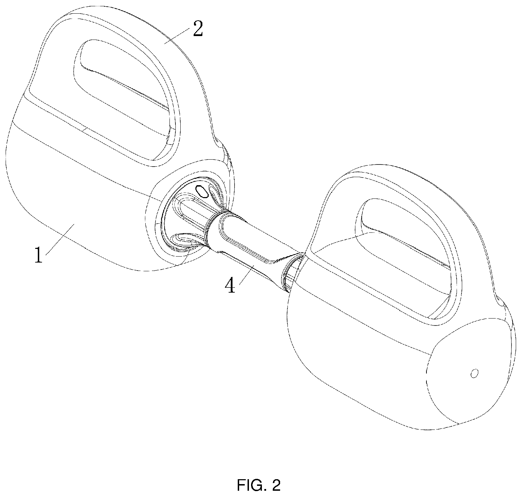

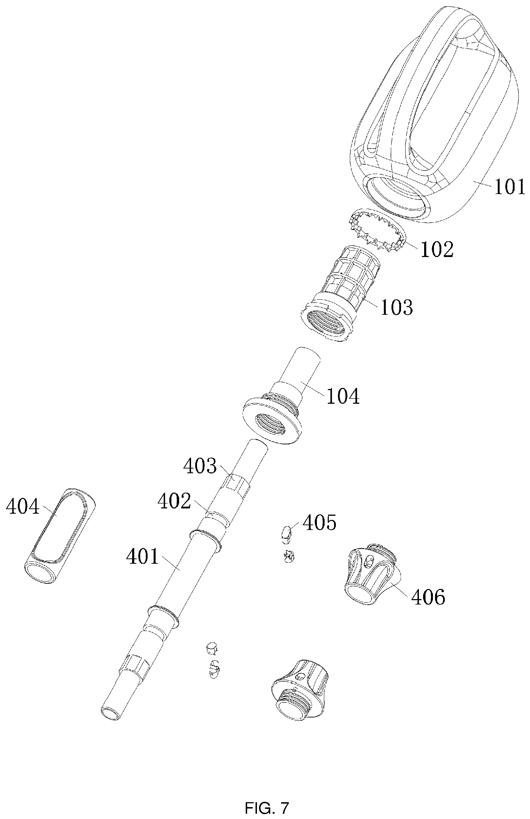

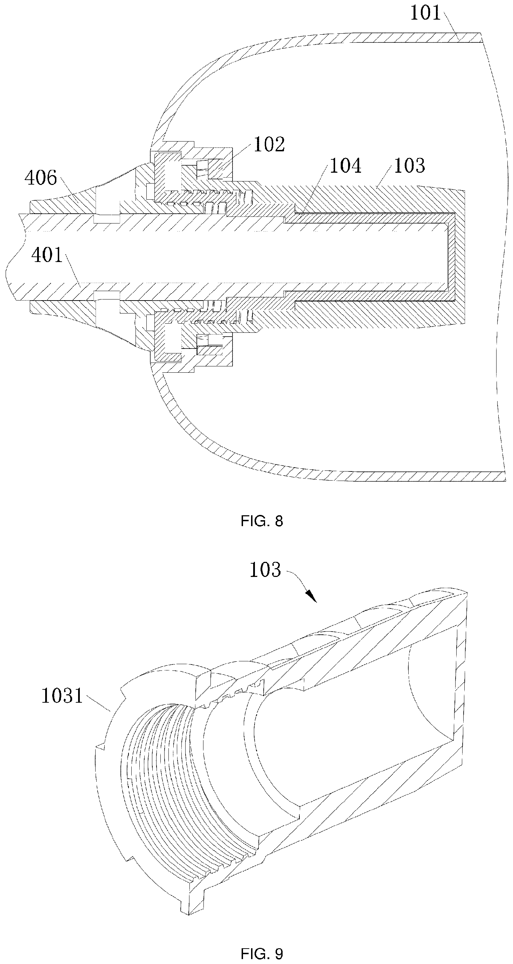

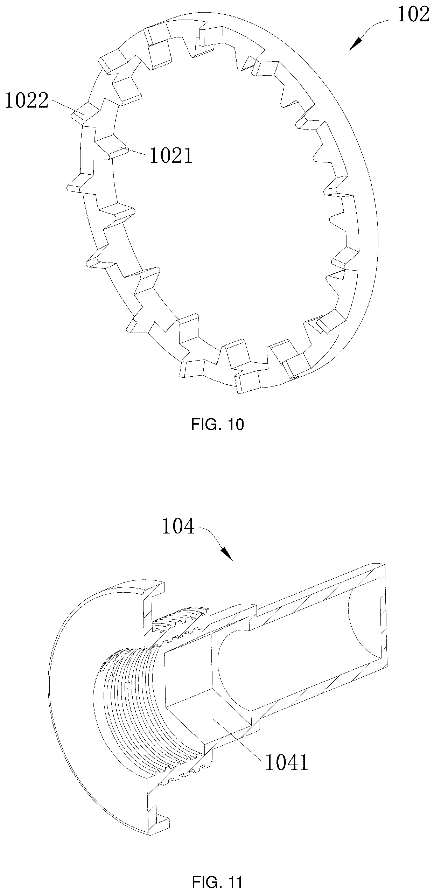

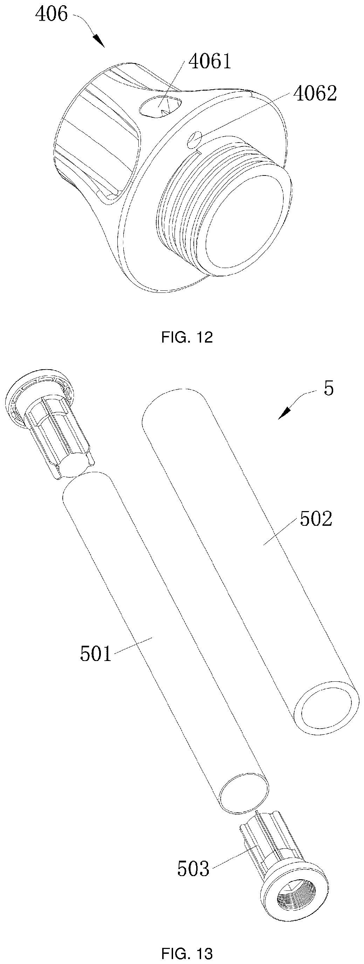

Referring to FIGS. 2 and 7-12, the present disclosure provides a multifunctional fitness equipment, the multifunctional fitness equipment includes a weight box 1. A connection hole 3 is provided on one end of the weight box 1, a holding rod is detachably received in the connection hole 3, and a handle 2 is provided on the weight box 1. More specifically, the handle 2 is arranged on a side surface of the weight box or on an end surface, away from the connection hole, of the weight box.

In this embodiment, the connection hole 3 is a threaded hole. Each end of the holding rod is provided with an external threaded connection end configured for threadedly connecting with the connection hole 3.

Specifically, the weight box 1 includes an outer housing 101 configured for receiving filling solution. The filling solution is not shown in the drawings. One end of the outer housing 101 is provided with an opening. The weight box further includes an inner sealing sleeve 103 arranged in the opening. The inner sealing sleeve 103 is configured for fixedly connecting to the filing solution as the filling solution solidifies. That is, the inner sealing sleeve 103 is mainly configured for fixedly connecting with the solidified filling solution. To achieve an aesthetically pleasing effect, the weight box further includes a first outer sealing sleeve 104 sleeved on an outside of the inner sealing sleeve 103. The connection hole 3 is a threaded hole arranged inside the first outer sealing sleeve 104.

More specifically, the weight box further includes a ring gear 102 installed on an outer wall of the inner sealing sleeve 103. Inner teeth 1021 evenly distributed on an inner wall of the ring gear 102, and outer teeth 1022 evenly distributed on an outer end surface of the ring gear 102. The inner sealing sleeve includes a flange face on the outer end surface of the inner sealing sleeve and a recessed groove on the flange face. The recessed groove is arranged in a circumferential direction of the flange face. The outer teeth 1022 abut the flange face. When the inner sealing sleeve 103 is installed inside the outer housing 101, a space between the inner teeth, a space between the outer teeth, and the recessed groove 1031 are configured to release the filling solution received in the outer housing 101 and the gas discharged by the filling solution as the filling solution solidifies. The ring gear 102 is configured mainly to connect an internal cavity of the outer housing 101 with outside space. Without the ring gear 102, it is not easy for the inner sealing sleeve 103 to insert into place, and the gas generated as the filling solution solidifies may not be fully released, which becomes a security risk.

In this embodiment, the holding rod is a first holding rod 4. The first holding rod 4 includes a rod body 401. Each end of the rod body 401 is rotatably installed with a connection rotary knob 406. The connection rotary knob 406 is threadedly connected with the first outer sealing sleeve 104.

Specifically, each end of the rod body 401 is further arranged with a limiting head 403 configured in a polylateral structure. The first outer sealing sleeve includes a limiting hole with a polylateral structure. The limiting head 403 is configured for inserting into the first outer sealing sleeve 104 and cooperating with the limiting hole 1041 to prevent relative rotations between the first outer sealing sleeve 104 and the rod body 401. In this embodiment, the cross-sectional shapes of the limiting head 403 and the limiting hole 1041 are both regular hexagons. Moreover, the cross-sectional shape of the limiting head 403 and the limiting hole 1041 may also be regular quadrilateral, regular triangle, regular octagon, etc.

Specifically, the holding rod further includes at least one wedge block 405 detachably installed on a radial position of the connection rotary knob 406. In this embodiment, two wedge blocks are provided and equally distributed on a circumferential direction of the connection rotary knob 406. The connection rotary knob 406 is provided with a center hole. Two radial holes 4061 connected with the center hole of the connection rotary knob 406 are provided on the circumferential direction of the connection rotary knob 406. The two wedge blocks 405 are inserted into the two radial holes 4061 respectively. At least one screw installation hole 4062 is arranged on an end portion of the connection rotary knob 406 to install at least one screw and therefore fix the at least one wedge block 405.

Each end of the rod body 401 is provided with an annular groove 402. One end of the at least one wedge block 405 is extended along a direction of the center hole of the connection rotary knob 406 and configured for placing in the annular groove 402. When installing the first holding rod 4, firstly, the rod body 401 is inserted into the first outer sealing sleeve 104 to connect the limiting head 403 with the limiting hole 1041. Secondly, the connection rotary knob 406 rotates to connect the outer threads of the end portion of the connection rotary knob 406 to the connection hole 3 of the first outer sealing sleeve 104. During this process, the rod body 401 and the first outer sealing sleeve 104 only have the freedom to move relative to each other in the axial direction without causing the rod body 401 to rotate. This avoids the problem that the weight boxes at two ends are not symmetrical, and is convenient to assemble.

Specifically, the holding rod further includes a first holding sleeve 404 sleeved on an outside of the rod body 401 to contact with users' hands during use, which can protect the rod body 401 and avoid wear of the rod body 401. Meanwhile, various materials such as rubber can be used for the first holding rod according to the actual needs to increase the friction with the hand.

In this embodiment, the fitness equipment is mainly used as a dumbbell. The users grip the middle part of the first holding rod 4 to perform arm strength exercises.

### <Third Embodiment>

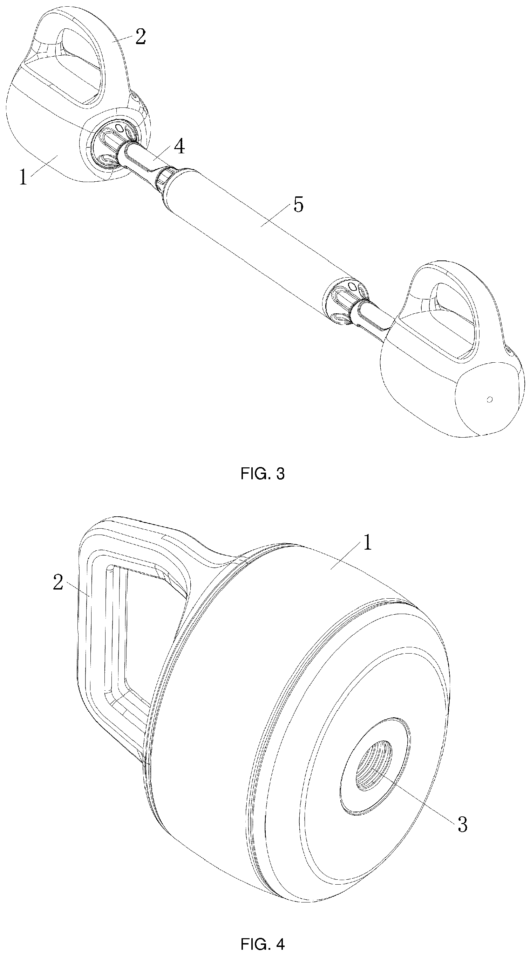

Referring to FIGS. 3 and 7-13, a multifunctional fitness equipment was synthesized in the same manner as in the fifth embodiment, except that the holding rod further includes a second holding rod 5. Two first holding rods 4 and one second holding rod 5 connected between the two first holding rods 4.

Specifically, each end of the second holding rod 5 is detachably connected with the first holding rod 4.

More specifically, the second holding rod 5 includes an inner sleeve 501. Each end of the second holding rod 5 is fixedly provided with a second outer sealing sleeve 503. The second holding rod 5 further includes a second holding sleeve 502 installed on an outside of the inner sleeve 501. The second outer sealing sleeve 503 is threadedly connected with the first holding rod 4. Center of the second outer sealing sleeve 503 is provided with internal threads to threadedly connect with the connection rotary knob 406 on the first holding rod 4 to connect the second holding rod 5 with the first holding rod 4.

In this embodiment, the fitness equipment is used as a barbell. The users grip a middle part of the second holding rod 5 to perform exercises.

### <Forth Embodiment>

Referring to FIG. 4, a multifunctional fitness equipment was synthesized in the same manner as in the first embodiment, except that the handle 2 is arranged on an end portion, away from the connection hole 3, of the weight box 1, defining a kettlebell with a different structure from that of the first embodiment to use.

### <Fifth Embodiment>

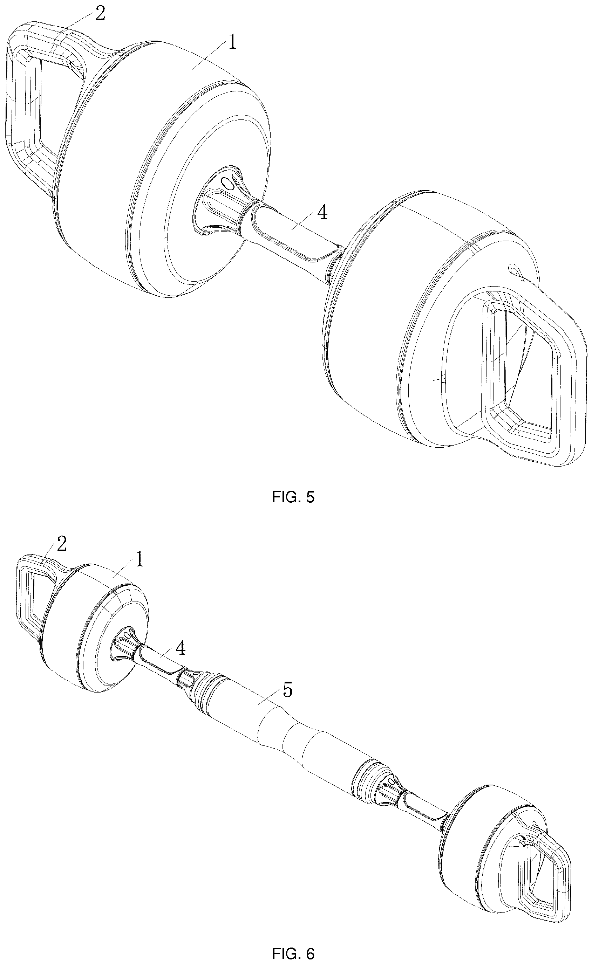

Referring to FIG. 5, a multifunctional fitness equipment was synthesized in the same manner as in the second embodiment, except that the handle 2 is arranged on an end portion, away from the connection hole 3, of the weight box 1 3, defining a kettlebell with a different structure from that of the second embodiment to use. Since the handle 2 is arranged on the end portion of the weight box 1, the barycenter of the handle 2 is in the middle of the holding rod, preventing accident caused by the deviation of the barycenter.

### <Sixth embodiment>

Referring to FIG. 6, a multifunctional fitness equipment was synthesized in the same manner as in the fifth embodiment, except that a second holding rod is added so that the fitness equipment can be used as a barbell. Since the handle 2 is arranged on the end portion of the weight box 1, the barycenter of the handle 2 is in the middle of the holding rod, preventing accident caused by the deviation of the barycenter.

The specific embodiments described herein are preferable examples to illustrate the spirit of the present disclosure only and not limiting the scope of this disclosure. Those skilled in the art to which the present disclosure belongs can make various modifications or additions to the specific embodiments described or use similar alternatives, but they will not deviate from the spirit or exceed the scope of the present disclosure.

### REFERENCE SIGNS LIST

1: weight box
101: outer housing
102: ring gear
1021: inner teeth
1022: outer teeth
103: inner sealing sleeve
1031: recessed groove
104: first outer sealing sleeve
1041: limiting hole
2: handle
3: connection hole
4: first holding rod
401: rod body
402: annular groove
403: limiting head
404: first holding sleeve
405: wedge block
406: connection rotary knob
4061: radial hole
4062: screw installation hole
5: second holding rod
501: inner sleeve
502: second holding sleeve
503: second outer sealing sleeve

## Claims

1. A multifunctional fitness equipment comprising:
a weight box,
a connection hole provided on one end of the weight box,
a holding rod detachably received in the connection hole, and
a handle provided on a side surface of the weight box or on an end surface, away from the connection hole, of the weight box.

2. The multifunctional fitness equipment according to claim 1, wherein the connection hole is a threaded hole, each end of the holding rod is provided with an external threaded connection end configured for threadedly connecting with the connection hole.

3. The multifunctional fitness equipment according to claim 1, wherein the weight box comprises an outer housing configured for receiving filling solution, one end of the outer housing is provided with an opening, the weight box further comprises an inner sealing sleeve arranged in the opening, the inner sealing sleeve is configured for fixedly connecting to the solidified filling solution, the weight box further comprises a first outer sealing sleeve sleeved on an outside of the inner sealing sleeve, the connection hole is a threaded hole arranged inside the first outer sealing sleeve.

4. The multifunctional fitness equipment according to claim 3, wherein the weight box further comprises a ring gear installed on an outer wall of the inner sealing sleeve, inner teeth evenly distributed on an inner wall of the ring gear, and outer teeth evenly distributed on an outer end surface of the ring gear.

5. The multifunctional fitness equipment according to claim 4, wherein the inner sealing sleeve comprises a flange face on the outer end surface of the inner sealing sleeve and a recessed groove on the flange face, the recessed groove is arranged in a circumferential direction of the flange face, the outer teeth abut the flange face, when the inner sealing sleeve is installed inside the outer housing, a space between the inner teeth, a space between the outer teeth, and the recessed groove are configured to releasing the filling solution and gas discharged by the filling solution as the filling solution solidifies.

6. The multifunctional fitness equipment according to claim 2, wherein the holding rod comprises a first holding rod comprising a rod body, each end of the rod body is rotatably installed with a connection rotary knob, the connection rotary knob is threadedly connected with a first outer sealing sleeve.

7. The multifunctional fitness equipment according to claim 6, wherein each end of the rod body is further arranged with a limiting head, wherein the limiting head is in a polylateral structure, the first outer sealing sleeve comprises a limiting hole with a polylateral structure, the limiting head is configured for inserting into the first outer sealing sleeve and cooperating with the limiting hole to prevent relative rotations between the first outer sealing sleeve and the rod body.

8. The multifunctional fitness equipment according to claim 6, wherein the holding rod further comprising at least one wedge block detachably installed on a radial position of the connection rotary knob, each end of the rod body is further arranged with an annular groove, one end of the at least one wedge block is extended along a direction of a center hole of the connection rotary knob and is configured for placing in the annular groove.

9. The multifunctional fitness equipment according to claim 6, wherein the holding rod further comprises a first holding sleeve sleeved on an outside of the rod body.

10. The multifunctional fitness equipment according to claim 6, wherein the holding rod further comprises a second holding rod, each end of the second holding rod is detachably connected with a corresponding end of the first holding rod.

11. The multifunctional fitness equipment according to claim 10, wherein the second holding rod comprises an inner sleeve, each end of the second holding rod is fixedly provided with a second outer sealing sleeve, the second holding rod further comprises a second holding sleeve installed on an outside of the inner sleeve, the second outer sealing sleeve is threadedly connected with the first holding rod.
